(19) Europäisches Patentamt
European Patent Office
Office européen des brevets

(11) Publication number: **0 113 430**
**B1**

(12) **EUROPEAN PATENT SPECIFICATION**

(45) Date of publication of patent specification: **28.01.87**

(51) Int. Cl.$^4$: **C 08 G 65/44**

(21) Application number: **83112061.3**

(22) Date of filing: **01.12.83**

(54) ***Polyphenylene ether resins of controlled molecular weight and process of manufacture.***

(30) Priority: **09.12.82 US 448190**

(43) Date of publication of application:
**18.07.84 Bulletin 84/29**

(45) Publication of the grant of the patent:
**28.01.87 Bulletin 87/05**

(84) Designated Contracting States:
**DE FR GB IT NL**

(56) References cited:
**DE-A-2 046 353**
**US-A-3 440 217**
**US-A-4 092 294**

(73) Proprietor: **GENERAL ELECTRIC COMPANY**
**1 River Road**
**Schenectady New York 12305 (US)**

(72) Inventor: **Aycok, David Frederick**
**5 Hancock Drive**
**Glenmount New York 12077 (US)**

(74) Representative: **Catherine, Alain**
**General Electric - Deutschland Munich Patent Operations Frauenstrasse 32**
**D-8000 München 5 (DE)**

**EP 0 113 430 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The polyphenylene ether resins (also sometimes referred to as the polyphenylene oxide resins) constitute a well known family of engineering thermoplastics which are highly regarded for their chemical and physical properties. The resins and methods for their preparation are described in the patent literature, including U.S. Patent Nos. 3,306,874; 3,306,875; 3,257,357 and 3,257,358.

The polyphenylene ether resins can be prepared, as is well known, by the oxidative coupling of a phenol with oxygen in the presence of a complex copper-amine catalyst. The reaction can be carried out in a tertiary amine, for instance, which serves as a component of the catalyst as well as a solvent for the reaction mixture. Oxygen is bubbled through the reaction mixture and an exothermic reaction takes place, producing the corresponding phenylene oxide homopolymer or copolymer and by-product water. Further details are available in US—A—3 306 874 and 3 306 875.

While high molecular weight polymers have been made possible by the oxidative coupling procedure, it has been found that the molecular weight of the final polymer is not easily controlled. One reason is that the polymer molecular weight increases slowly during the early stages of the reaction, but quite rapidly during the later stages. Another reason is that the rate at which the molecular weight increases in the latter stages of reaction is dependent upon the amount of remaining active catalyst. The amount of active catalyst decreases during the reaction as a complex function of the initial reaction ingredients, the temperature history of the reaction, and the degree of oxygen dispersion in the reactor. These factors make it difficult to control the molecular weight of the polymer by stopping the reaction before its completion.

Many of these difficulties are pointed out in U.S.—A—3,440,217. It discloses that the chain length of certain poly (phenylene oxides) can be controlled by including in the starting mixture a phenol substituted n the 4(para) position with alkyl or alkenyl groups, for example, 2,4,6-trimethylphenol, and then proceeding with the oxidative coupling reaction.

It has now been discovered that phenolic compounds having an acidity constant ($K_a$) equal to or greater than phenol are also effective to control the molecular weight of polyphenylene ether resins prepared by oxidative coupling. For instance, it has been found that phenols as diverse as phenol, 2,6-dibromophenol and pentafluorophenol limit the growth in molecular weight of polyphenylene ethers in much the same way as 2,4,6-trimethylphenol, a known chain stopper.

As employed herein the terms "acidity constant" and "$K_a$" are used in their conventional senses and are defined herein as the equilibrium constant for the reaction of a phenol with a base (b):

$$K_a = [\text{phenoxide}]\,[bH^+]/[\text{phenol}][b]$$

Phenols with a Ka greater than phenol, $C_6H_5OH$, includes all phenols which are more acidic than phenol.

The amount of the above mentioned chain terminator employed in the process can vary widely, for example, from 0.1 to 50 percent by weight of the polymer, dependent on particular requirements.

The class of phenols which can be used as chain terminators are those which are more acidic than phenol and would include those phenols which have one or more electron withdrawing groups attached to the ring. Common electron withdrawing groups are —F, —Cl, —Br, —I, —$NO_2$, —CN, —$SO_2R$, —COOH, —OH, and —$NR_3$+.

Illustratively, the chain terminating phenol may be selected from among phenol, 2,6-dibromophenol, pentafluorophenol, 4-nitrophenol, 2,4-dinitrophenol, 2,3-dichlorophenol, 2-cyanophenol, 4-carboxyphenol, 2-chloro-4-nitrophenol and 4-methylsulfonylphenol.

In greater detail, the present process invention is carried out by passing molecular oxygen or an oxygen containing gas through a mixture of one or more phenols in a solution which also contains the dissolved catalyst components. Suitable phenolic starting materials are those having the formula

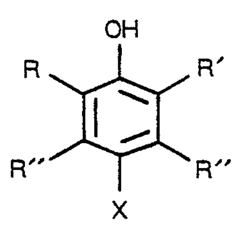

where X is a substituent selected from the group consisting of hydrogen, chlorine, bromine, and iodine, R is a monovalent substituent selected from the group consisting of hydrocarbon radicals and hydrocarbonoxy radicals, haloaryl radicals wherein all halogens are substituted on aromatic carbon atoms, and haloaryloxy radicals wherein all halogens are substituted on aromatic carbon atoms, R′ is the same as R and, in addition, may be halogen, and R″ is the same as R and, in addition, may be hydrogen or halogen, but preferably hydrogen.

The catalyst used in the process is composed of ingredients as disclosed in US—A 3 306 874 and 3 306 875. In general, the catalyst is a complex composed of a copper salt and amine, having the formula

$$R^2HN—R^1—NHR^2$$

in which $R^1$ has at least two and no more than three carbon atoms separating the two nitrogen atoms and is $C_{2-4}$ alkylene or $C_{3-7}$ cycloalkylene, and each $R^2$ is independently isopropyl or a $C_{4-8}$-tertiary alkyl group having no halogens on the α-carbon atom.

The copper can come from various soluble copper compounds, for example, cuprous oxide, cupric bromide, cuprous bromide, and so forth.

The amine may be any of those known for the purpose, for example, a secondary monoamine, e.g., dibutyl amine, or a combination of a hindered secondary amine (e.g., N,N'-di-tert-butylethylenediamine) and a tertiary amine with low steric requirements (e.g., n-butyldimethylamine).

If desired, the reaction mixture can include co-ingredients for the catalyst which serve to enhance the catalytic effect. Materials of this kind are disclosed, for instance, in U.S.—A—3,914,266, and may comprise a trialkyl amine and bromide ion. Illustratively, the trialkyl amine may be selected from among trimethyl amine, triethyl amine, dimethyl ethylamine, diethyl methylamine, tripropyl amine, tributyl amine, dimethyl butylamine, diethyl butyl amine, ethyl dibutylamine, diethyl propylamine, tripentyl amine, trihexyl amine, and the like. The source of bromide ion may be bromine itself or any soluble bromine containing compound, preferably hydrogen bromide or an alkali metal salt such as potassium bromide or sodium bromide.

The reaction can be carried out in an excess amount of the amine which functions as a solvent for the ingredients, or the reactants and catalyst components may be dissolved in some other solvent which is selected from among, for example, alcohols, ketones, hydrocarbons, chlorohydrocarbons, nitrohydrocarbons, ethers, esters, amides, mixed ether-esters and sulfoxides.

The reaction proceeds at room temperature, preferably with cooling to control the heat of reaction such that the temperature will not exceed 80°—100°C. Generally, reaction temperatures may be permitted to vary between about 0° and 50°C., and preferably between about 20° and about 30°C.

Superatmospheric pressures of 1 to 100 psig (0.0689 to 6.89bar), or higher, may be employed if desired.

The reaction may be terminated and the polymer recovered from the reaction mixture by use of standard techniques such as the use of aqueous acetic acid followed by precipitation of the polymer with a suitable anti-solvent such as methanol.

The process may be, and preferably is, carried out continuously in a series of reactors, with each reactor provided with a fresh supply of catalyst. A polymer of increasing molecular weight is obtained until the desired degree of polymerization is achieved.

The preferred end products, and this constitutes another aspect of the invention, are polyphenylene ether (oxide) homo- or copolymers having the formula:

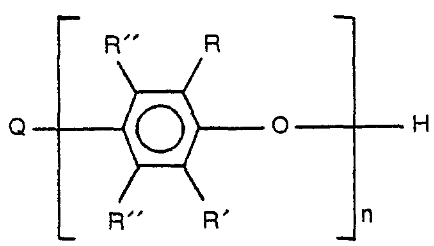

wherein R is monovalent and selected from the group consisting of hydrocarbon radicals, hydrocarbonoxy radicals, haloaryl radicals wherein all halogens are substituted on aromatic carbon atoms, and haloaryloxy radicals wherein all halogens are substituted on aromatic carbon atoms, R' is the same as R and, in addition, may be halogen, and R'' is the same as R and, in addition, may be hydrogen or halogen, but preferably hydrogen, and n represents the total number of monomer units and is an integer of at least about 10; and Q represents the described chain terminating compound or residue thereof.

Examples include homopolymers such as poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2-methyl-6-phenyl-1,4-phenylene)ether; poly(2-ethoxy-1,4-phenylene)ether, etc.

Also included within the scope of the above formula are copolymers such as poly(2,6-dimethyl-co-2,3,6-trimethyl-1,4-phenylene)ether and poly(2,6-dimethyl-co-2-methyl-6-butyl-1,4-phenylene)ether.

Preferred is poly(2,6-dimethyl-1,4-phenylene)ether, and especially those which are characterized by an intrinsic viscosity of between about 0.1 and about 0.9 deciliters per gram, in solution in chloroform at 30°C.

The invention is further illustrated in the following examples. These are intended only to show specific embodiments and not as a limitation on the scope of the invention.

Example 1

A polymerization was carried out in a one gallon (3.78 l) stirred autoclave equipped with a dip tube for oxygen and internal coils for cooling and heating. To the reactor were added, in order: 1740 ml of toluene, 512 grams of 2,6-xylenol dissolved in 743 ml of toluene, 20 grams of n-butyldimethylamine, 8.1 grams of di-n-butylamine, 2.5 grams of N,N'-di-tert-butylethylene diamine, 2.52 grams of 2,6-dibromophenol, 15 grams of sodium bromide, 0.35 grams of cuprous oxide dissolved in 4 grams of 48 percent hydrogen bromide. Oxygen was added at 3 standard cubic feet per hour (0.085 $m^3/g$) and the temperature was kept at 35°C. After 30 minutes, the reaction exotherm was over and the temperature was increased to 50°C. Samples were taken periodically and precipitation was induced with methanol. The intrinsic viscosities (measured at 30°C. in chloroform) of the polymer samples were as follows:

| Time (min.) | 35 | 40 | 45 | 60 | 80 |
|---|---|---|---|---|---|
| IV (dl/g) | .38 | .49 | .53 | .64 | .72 |

There was obtained a poly(2,6-dimethyl-1,4-phenylene ether) resin having terminal groups formed from 2,6-dibromophenol.

Example 2 (Control)

To a one gallon (3.78 l) reactor were added, in order: 2000 ml of toluene, 459 grams of 2,6-xylenol dissolved 572 ml of toluene, 20 grams of n-butyldimethylamine, 8.1 grams of di-n-butylamine, 2.5 grams of N,N'-di-tert-butylethylene diamine, 15 grams of sodium bromide, 0.35 grams of cuprous oxide dissolved in 4 grams of 48 percent hydrogen bromide. Oxygen was added at a rate of 3 SCFH (0.085 $m^3/g$) and the temperature kept at 35°C. After 30 minutes, the reaction exotherm was over and the temperature was increased to 50°C. The intrinsic viscosities were as follows:

| Time (min.) | 29 | 40 | 60 |
|---|---|---|---|
| IV (dl/g) | 0.62 | 0.85 | 0.95 |

Example 3

Example 2 was repeated, except that 3.67 grams of pentafluorophenol were added at the beginning of the reaction. The measured intrinsic viscosities were as follows:

| Time (min.) | 30 | 40 | 60 |
|---|---|---|---|
| IV (dl/g) | 0.38 | 0.59 | 0.64 |

There was obtained a poly(2,6-dimethyl-1,4-phenylene ether) resin having terminal groups formed from pentafluorophenol.

Example 4

Example 2 was repeated except that 2.1 grams of phenol were added at the beginning of the reaction. The measured intrinsic viscosities were as follows:

| Time (min.) | 30 | 40 | 60 |
|---|---|---|---|
| IV (dl/g) | 0.55 | 0.55 | 0.60 |

Example 5 (Comparison)

Example 2 was repeated, except that 2.72 grams of 2,4,6-trimethylphenol were added at the beginning of the reaction. The measured intrinsic viscosities were as follows:

| Time (min.) | 33 | 40 | 60 | 77 |
|---|---|---|---|---|
| IV (dl/g) | 0.54 | 0.55 | 0.58 | 0.59 |

There was obtained a poly(2,6-dimethyl-1,4-phenylene ether) resin having terminal groups formed from 2,4,6-trimethylphenol.

**Claims**

1. In a process for the production of polyphenylene ether resin by the oxidative coupling of a phenolic compound in the presence of a copper-amine catalyst, the improvement for controlling the molecular weight of said resin comprising conducting the reaction in the presence of a chain terminating phenolic compound exclusive of p-hydroxy benzoic acid and p-hydroxy benzene sulfonic acid, said compound being different from the phenolic starting material and having an acidity constant equal to or greater than phenol.

2. A process according to Claim 1, in which the chain terminating compound is selected from among phenolic compounds having one or more electron withdrawing groups attached to the aromatic ring.

3. A process according to Claim 2, in which the electron withdrawing group is one or more of —F, —Cl, —Br, —I, —$NO_2$, —CN, —$SO_2R$, —COOH, —OH and —$NR_3$+, where R is lower alkyl having from one to six carbon atoms.

4. A process according to Claim 1, in which the phenolic starting material has the formula

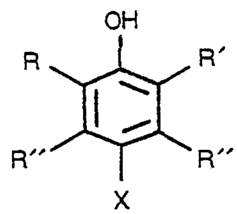

where X is a substituent selected from the group consisting of hydrogen, chlorine, bromine, and iodine, R is a monovalent substituent selected from the group consisting of hydrocarbon radicals, hydrocarbonoxy radicals, haloaryl radicals wherein all halogens are substituted on aromatic carbon atoms, and haloaryloxy radicals wherein all halogens are substituted on aromatic carbon atoms, R′ is the same as R, and in addition may be halogen and R″ is the same as R and, in addition, may be hydrogen or halogen.

5. A process according to Claim 1, in which the phenolic starting material is 2,6-xylenol.

6. A process according to Claim 1, in which the chain terminating compound is employed in an amount within the range between 0.1 and 50 percent by weight of the polyphenylene ether resin end product.

7. A process according to Claim 1, in which the catalyst comprises an admixture of a copper compound, a hindered secondary amine, a tertiary amine with low steric requirements and a secondary monoamine.

8. A process according to Claim 1, which is carried out in an organic solvent.

9. A process according to Claim 1, in which the chain terminating compound is phenol.

10. A process according to Claim 1, in which the chain terminating compound is 2,6-dibromophenol.

**Patentansprüche**

1. Verfahren zur Erzeugung von Polyphenylenätherharz durch oxidative Kupplung einer phenolischen Verbindung in Anwesenheit eines Kupfer-Aminkatalysators, dadurch gekennzeichnet, daß zur Steuerung des Molekulargewichtes des Harzes die Reaktion in Anwesenheit einer phenolischen Kettenabbruchverbindung, ausgenommen p-Hydroxy-Benzoesäure und p-Hydroxy-Benzolsulfonsäure, durchgeführt wird, wobei diese Verbindung von dem phenolischen Ausgangsmaterial verschieden ist und eine Säurekonstante aufweist, die gleich oder größer als diejenige von Phenol ist.

2. Verfahren nach Anspruch 1, worin die Kettenabbruchverbindung ausgewählt ist aus phenolischen Verbindungen mit einer oder mehreren elektronenentziehenden Gruppen, die an den aromatischen Ring gebunden sind.

3. Verfahren nach Anspruch 2, worin die elektronenentziehende Gruppe eine oder mehrere der Gruppen —F, —Cl, —Br, —J, —$NO_2$, —CN, —$SO_2R$, —COOH, —OH und —$NR_3$+ ist, worin R einen niederen Alkylrest mit eins bis sechs Kohlenstoffatomen darstellt.

4. Verfahren nach Anspruch 1, worin das phenolische Ausgangsmaterial die Formel

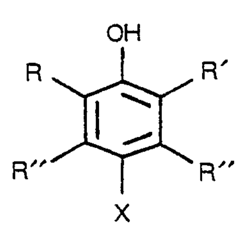

aufweist, worin X ein Substituent ist ausgewählt aus der Gruppe bestehend aus Wasserstoff, Chlor, Brom und Jod, R ein einwertiger Substituent ist ausgewählt aus der Gruppe bestehend aus Kohlenwasserstoffresten, Kohlenwasserstoffoxyresten, Halogenarylresten, worin alle Halogenatome an aromatische Kohlenstoffatome gebunden sind und Halogenaryloxyreste, worin alle Halogenatome an aromatische Kohlenstoffatome gebunden sind, R' die gleiche Bedeutung wie R aufweist und zusätzlich Halogen sein kann und R" die gleiche Bedeutung wie R besitzt und zusätzlich Wasserstoff oder Halogen sein kann.

5. Verfahren nach Anspruch 1, worin das phenolische Ausgangsmaterial 2,6-Xylenol ist.

6. Verfahren nach Anspruch 1, worin die Kettenabbruchverbindung in einer Menge im Bereich zwischen 0,1 und 50 Gew.-% Polyphenylenätherharzendproduktes verwendet wird.

7. Verfahren nach Anspruch 1, worin der Katalysator eine Mischung aus einer Kupferverbindung, einem sterisch gehinderten sekundären Amin, einem tertiären Amin mit geringen sterischen Anforderungen und einem sekundären Monoamin umfaßt.

8. Verfahren nach Anspruch 1, welches in einem organischen Lösungsmittel durchgeführt wird.

9. Verfahren nach Anspruch 1, in welchem die Kettenabbruchverbindung Phenol ist.

10. Verfahren nach Anspruch 1, in welchem die Kettenabbruchverbindung 2,6-Dibromophenol ist.

**Revendications**

1. Dans un procédé de production de résine de poly(oxyphénylène) par le couplage oxydant d'un composé phénolique en présence d'un catalyseur cuivre-amine, le perfectionnement permettant le règlage de la masse molaire de la résine, comprenant la mise en oeuvre de la réaction en présence d'un composé phénolique limitateur de chaîne, à l'exception de l'acide p-hydroxybenzoïque et de l'acide p-hydroxybenzène-sulfonique, le composé étant différent du matériau de départ phénolique et présentant une constante d'acidité égale ou supérieure à celle du phénol.

2. Procédé selon la revendication 1, dans lequel le composé limitateur de chaîne est choisi parmi des composés phénoliques contenant un ou plusieurs groupes attracteurs d'électrons attachés au cycle aromatique.

3. Procédé selon la revendication 2, dans lequel le groupe attracteur d'électrons est un ou plusieurs des éléments du groupe constitué par —F, —Cl, —Br, —I, —$NO_2$, —CN, —$SO_2R$, —COOH, —OH et —$NR_3$+ sachant que R représente un groupe alkyle inférieur ayant de 1 à 6 atomes de carbone.

4. Procédé selon la revendication 1, dans lequel le matériau de départ phénolique répond à la formule

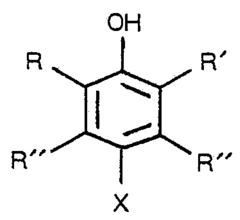

dans laquelle X représente un substituant choisi dans le groupe constitué par l'hydrogène, le chlore, le brome, et l'iode, R représente un substituant monovalent choisi dans le groupe constitué par des radicaux hydrocarbonés, des radicaux oxyhydrocarbonés, des radicaux aryles halogénés dans lesquels tous les halogènes sont portés par des atomes de carbone aromatique, et des radicaux aryloxy halogénés dans lesquels tous les halogénes sont portés par des atomes de carbone aromatique, R' est identique à R et peut, en plus, représenter un halogène et R" est identique à R et, peut, en plus, représenter l'hydrogène ou un halogène.

5. Procédé selon la revendication 1, dans lequel le matériau de départ phénolique est le xylénol-2,6.

6. Procédé selon la revendication 1, dans lequel on emploie le composé limitateur de chaîne en une quantité comprise entre 0,1 et 50% en poids du produit final de résine de poly(oxyphénylène).

7. Procédé selon la revendication 1, dans lequel le catalyseur comprend un mélange d'un composé du cuivre, d'une amine secondaire à encombrement stérique, d'une amine tertiaire peu encombrée stériquement et d'une monoamine secondaire.

8. Procédé selon la revendication 1, que l'on met en oeuvre dans un solvant organique.

9. Procédé selon la revendication 1, dans lequel le composé limitateur de chaîne est le phénol.

10. Procédé selon la revendication 1, dans lequel le composé limitateur de chaîne est le dibromo-2,6 phénol.